# EUROPEAN PATENT APPLICATION

(11) **EP 4 296 857 A1**
(43) Date of publication of application: **27.12.2023**
(21) Application number: 22306790.1
(22) Date of filing: 05.12.2022
(51) Int. Cl.: G06F 9/50

(54) **BATCH PROCESSING TRACKING**

(30) Priority: 20.06.2022 FR 2205992
(71) Applicant: Amadeus S.A.S., 06410 Biot (FR)
(72) Inventor: BEUZIT, Serge, 06370 Mouans Sartoux (FR); HEBANT, Patrick, Ealing, W5 4AJ (GB); DOR, Pierre, 06140 Vence (FR); DAZY, Romain, 06480 La Colle sur Loup (FR)
(74) Representative: Samson & Partner Patentanwälte mbB

(57) **Abstract**

A controller in a distributed information technology system provides an end-of-batch indication for a batch of initial data to be processed by at least one first processing node. The controller receives a completion indication indicating that the at least one first processing node has completed processing the batch of initial data resulting in one or more batches of intermediate data. The controller provides an end-of-batch indication for each of the one or more batches of intermediate data to be processed by one or more second processing nodes of the plurality of processing nodes. The controller receives a completion indication indicating that the at least one second processing node has completed processing the batch of intermediate data resulting in a batch of final data and generates a control signal indicating that the batch processing has been completely processed.

## Description

### FIELD

This disclosure generally relates to information technology. More specifically, the disclosure relates to processing batches of data in a distributed data processing system.

### BACKGROUND

Processing systems with clusters of one or more servers such as Apache Kafka^{®}, Apache Storm^{®,} Apache Flink^{®}, NATS (nats.io), Azure Event Hubs^{®}, or Amazon Kinesis^{®} provide streaming messages and/or micro-services. Processing may occur in batches of data such as batches of messages. Users may subscribe to a service and receive published data.

### SUMMARY

The present mechanisms are set forth by the independent claims.

According to a first aspect, a method for batch processing in a distributed information technology (IT) system is provided. The distributed information technology system includes a plurality of interconnected processing nodes and a controller communicatively coupled to the processing nodes. The method is executed at the controller. The controller provides an end-of-batch indication for a batch of initial data to be processed by at least one first processing node of the plurality of processing nodes. The controller receives, from each of the at least one first processing node, a completion indication indicating that the at least one first processing node has completed processing the batch of initial data resulting in one or more batches of intermediate data. The controller provides an end-of-batch indication for each of the one or more batches of intermediate data to be processed by one or more second processing nodes of the plurality of processing nodes. The controller receives, from each of the at least one second processing node, a completion indication indicating that the at least one second processing node has completed processing the batch of intermediate data resulting in a batch of final data. The controller generates a control signal indicating that the batch processing has been completely processed.

In accordance with a second aspect, a controller is provided as part of a distributed information technology system. The controller is communicatively coupled to processing nodes of the distributed information technology system. The controller is arranged to perform any one of the method aspects set out above.

In accordance with a third aspect, a computer program is provided which makes one or more processors of a computer to execute the aforementioned method aspect when the computer program is run on the computer.

Further refinements of the aspects are set forth by the dependent claims.

### BRIEF DESCRIPTION OF THE FIGURES

Aspects and examples of the present disclosure are described with reference to the following figures, in which:
FIGS. 1 to 3 visualize batch processing in a distributed processing system.
FIGS. 4 to 8 show the operation of a controller to track batch processing in the distributed processing system.
FIG. 9 visualizes a batch processing completion state.
FIG. 10 provides an example of a processing system topology configuration available to the controller.
FIG. 11 shows an internal structure of a computing machine implementing the controller and/or processing nodes.

### DETAILED DESCRIPTION

The present disclosure addresses a technical problem in automated or semi-automated data processing, in particular in distributed processing systems with changing topology such as stream-processing systems, namely to detect when the processing of an identified set of data, hereinafter referred to as a batch, such as batch of messages is completed. For example, an instance in the data processing system may need to be informed when a batch of data is completely processed in the distributed processing system in order to able to trigger any next step(s).

This technical problem does not exist to a significant extent in a centralized processing system, such as a monolithic application running on a computing stations, as the process and termination is deterministic and can be more easily monitored due to the central processing. to read a file and process its full content. However, it is challenging to do the same in a generic distributed processing system such as a micro-service system with parallelization and indeterministic processing times at individual processing nodes.

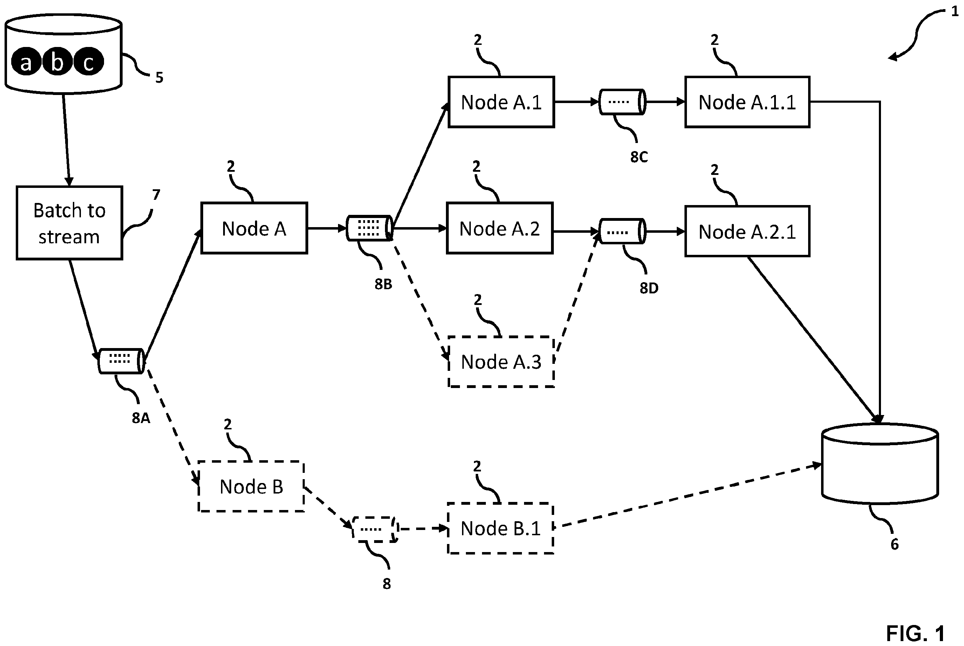

Such distributed IT system or processing system (both terms are used synonymously herein) is exemplarily shown in FIG. 1. The distributed IT system 1 may be a micro-service event-driven system, a service-oriented system, a webservice system or a mix of these. Neither the content of the batch data nor the type of services provided by the IT system are important for the present methodologies - they are applicable to any sort of batch data or batch messages as well as any sort of services or applications provided by the IT system 1.

The distributed IT system 1 includes multiple processing nodes 2 which are interconnected by communication interfaces. For example, the distributed processing system 1 is implemented by a micro-services based architecture wherein e.g. a Kafka^{®} streaming platform is used as an intermediate layer (broker) to exchange messages. The processing nodes 2 may assume roles of consumers and producers, any one of the nodes 2 e.g. providing a micro service to a number of registered users. The communication interfaces 8 interconnect the processing nodes 2 and are, as a non-limiting example, Kafka topics (visualized in FIG. 1 by the cylinders) and partitions (visualized in FIG. 1 by the dotted lines within the cylinders). Other types of communication interfaces such as buffers, queues, etc. are encompassed as well. The dotted arrows indicate presently deactivated elements and connections, while straight arrows indicate presented active elements and connections. Thus, the topology of the processing system 1 is configurable and may change over time and from batch processing to batch processing.

The processing system also includes any sort of storages 5, 6, an initial storage 5 storing one or more batches of initial data (e.g. messages) to be processed and a result storage 6 for storing batches of resulting data, i.e. the result of the batch processing of the processing system 1. Storages 5, 6 may be implemented by one or more of a file system, a database, Kafka topics, buffers, caches, and the like. Initial storage 5 and result storage 6 may also be the same, e.g. the batches of initial data and the batches of result data can be stored in one and the same database. Moreover, the processing system includes an entity, denoted as batch to stream 7, responsible for initiating the batch processing and making a batch of initial data available for processing by the nodes 2.

In the exemplary situation of FIG. 1, the initial storage stores a batch of three messages, message a, message b and message c, which are to be processed by the nodes 2 of the processing system. The goal is to determine when all three messages have been completely processed by the processing system 1 and all possibly messages resulting from the processing are stored in the result storage 6.

In the example of FIG. 1, the present topology of the processing system 1 can be considered to include four processing stages:
- The messages are first read from the initial storage 5 by the batch to stream entity 7 and moved to the first partition(s) 8A of a first topic.
- They are then consumed by node A and resulting messages are stored in the second partitions 8B of a second topic.
- The resulting messages are then retrieved from the second partitions 8B by the node A. 1 and A.2 and further resulting messages are put into the partitions 8C, 8D, respectively, of still another topic.
- Finally, the further resulting messages are retrieved from the partitions 8C, 8D, processed by the nodes A. 1.1 and A.2.1 and final resulting messages are then stored in the result storage 6.

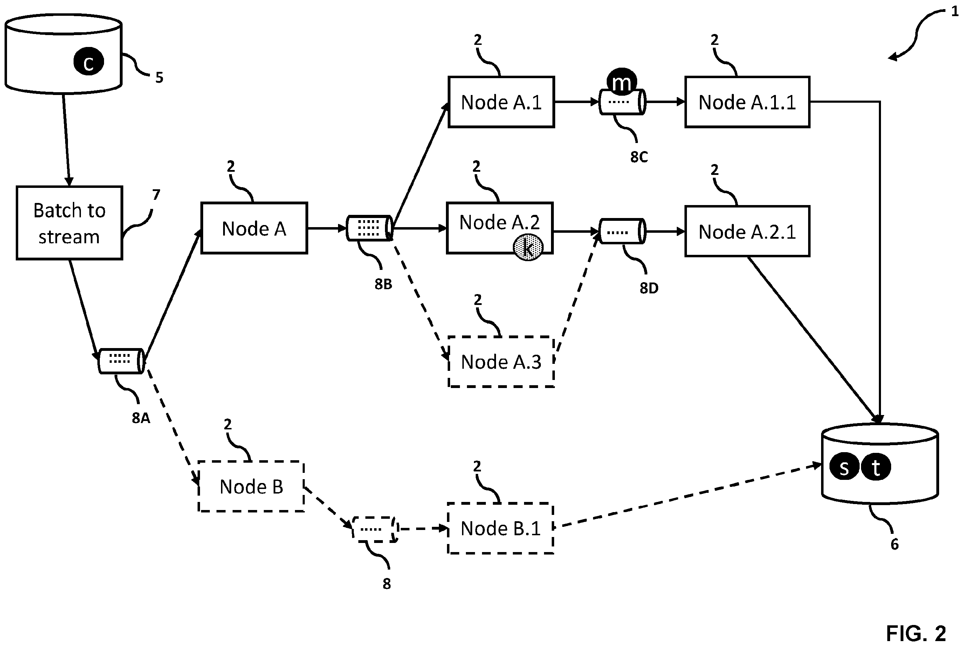

Processing a message by a node 2 may result in any number of outbound messages, include no outbound message, one outbound message or multiple outbound message on the active outbound communication interfaces 8. In the example of FIG. 1, each of node A, node A.1, node A.2, node A.1.1 and node A.2.1 produces one outbound message per inbound message. FIG. 2 shows an exemplary intermediate state of the processing of the batch of messages a, b, c. In this state, message a has already been completely processed and final resulting messages s, t are stored in the result stage 6. Currently, message b is being processed by the processing system. (Note: For reasons of illustration, message c is still shown to be located in the initial storage 5, while in practical systems, a whole batch will be read from the initial storage 5 and the messages will be processed by the nodes as soon as possible.). Intermediate resulting message m has been produced by node A.1 and is currently waiting in the partition 8B for retrieval and processing by node A.1.1. However, for reasons of current overload, processing of the intermediate result message k by node A.2 is currently interrupted and may eventually be aborted. For example, it is possible that node A.3 is newly deployed in order to scale up the processing system 1 and relieve the current processing load at node A.2.

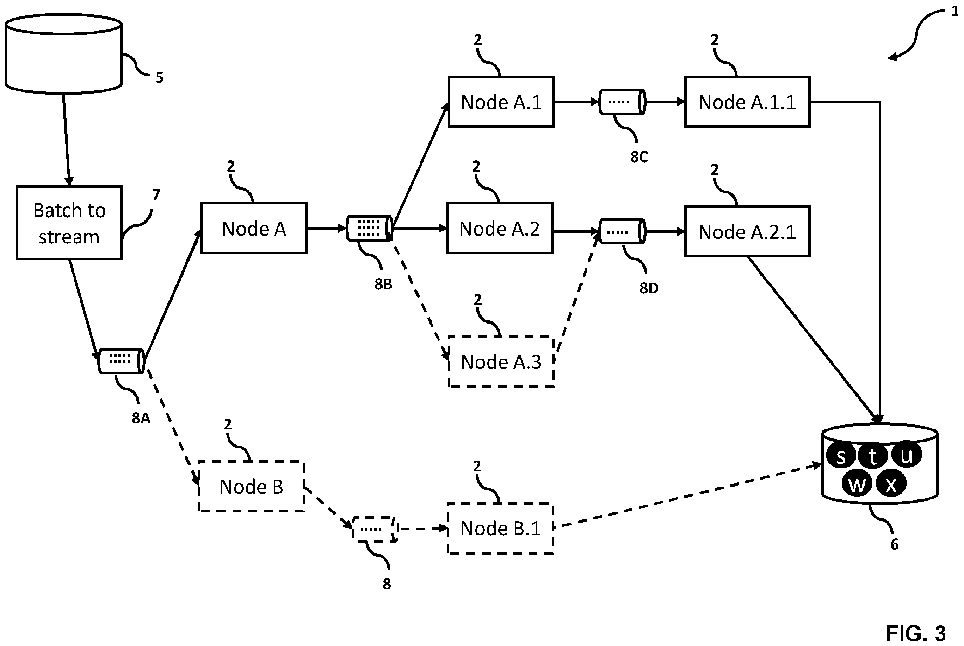

FIG. 3 shows an exemplary situation when processing of the batch of the messages a, b, c has been concluded and the final resulting messages s, t, u, w, x are stored in the result storage 6. Due to the drop of intermediate result message k at node A.2 (FIG. 2), a final result message v which would have been produced by node A..2.1 is missing in the result storage 6 and will not be produced at all (Note: In such error situations, which can be permanent or temporary, different measures are available for remedy such as buffering the non-processed message in a queue for later investigation, the node issuing a failure or time-out notification and/or an administrator investigating an identifying the failure situation). In an alternative situation in which processing the intermediate result message k has been substantially delayed at node A.2, there may be a longer period of time until a final result message v is output by node A.2.1 to the final result storage 6. Overall, complete processing a batch of data is not entirely deterministic, as processing speed and processing behaviour of the various nodes 2 may vary for a number of reasons, such as particularities of hardware implementation, differences in network connections, current processing load of a node 2, etc. Thus, the processing speed on each part of the topology of the processing system 2 can be different.

As a consequence, it is not trivial to determine when the processing of the full batch of data is completed. Counting the number of intermediate or final result messages is not an option as the number and output time of result messages is indeterministic. Adding naively a software process implementing a "broom wagon" is not feasible, either, as such process could be processed before the latest final result message is output.

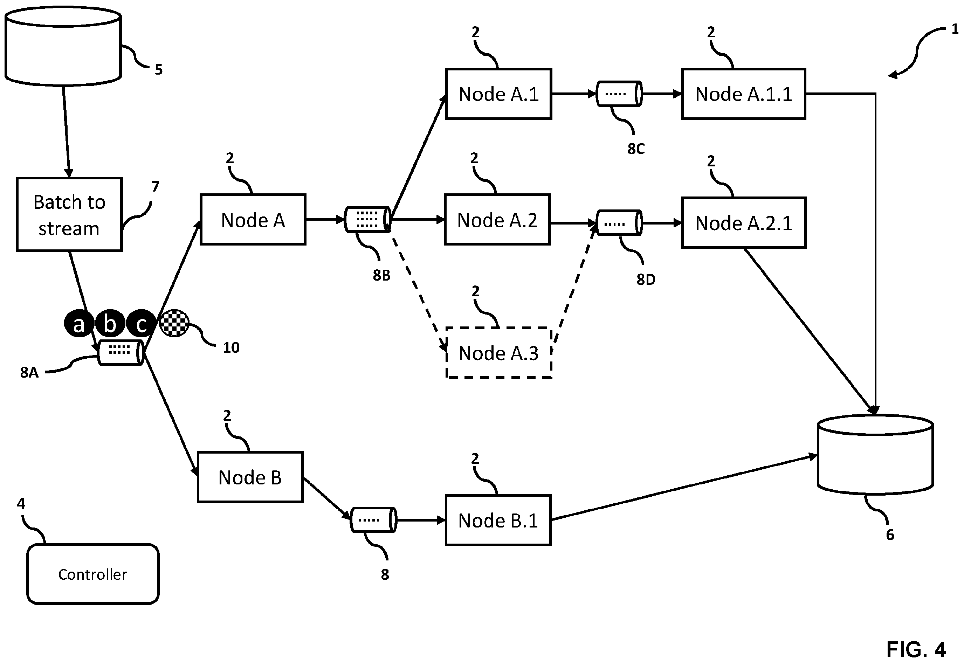

Rather, the present disclosure introduces a controller 4 (FIG. 4) which maintains an overview of the current and final state of the processing within the processing system 1. More specifically, the present disclosure specifies a controller, a method and a computer program or computer program product for batch processing in a distributed information technology system. The distributed information technology (IT) system includes a plurality of interconnected processing nodes and the controller communicatively coupled to the processing nodes. The communication coupling between the controller and the processing nodes may be similar to the communication interfaces between the processing nodes themselves. In some embodiments, the IT system also features a dedicated control communication layer, implemented in hardware and/or software including suitable communication protocols, e.g. featuring control partitions, by which the controller is enabled to communicate with the processing nodes.

The controller is arranged with functionalities and to perform activities to monitor processing a batch of data in the distributed IT system and determine when the batch of data has been finally and completely processed by the IT system. These functionalities and activities of the controller generally enable the controller to track which processing nodes in the IT system have already concluded processing the batch of data and which processing nodes do not already have concluded processing the batch of data. To facilitate this tracking functionality, the controller utilizes end-of-batch indications which signal the end of a batch of data to the processing nodes and the processing nodes return completion indications to the controller after the end-of-batch indications have been processed. The end-of-batch indications can be understood as a concluding portion of a batch of data or batch of messages, i.e. as a further message, however, with control payload as opposed to carrying user data. Likewise, the completion indications returned by the nodes 2 are control messages.

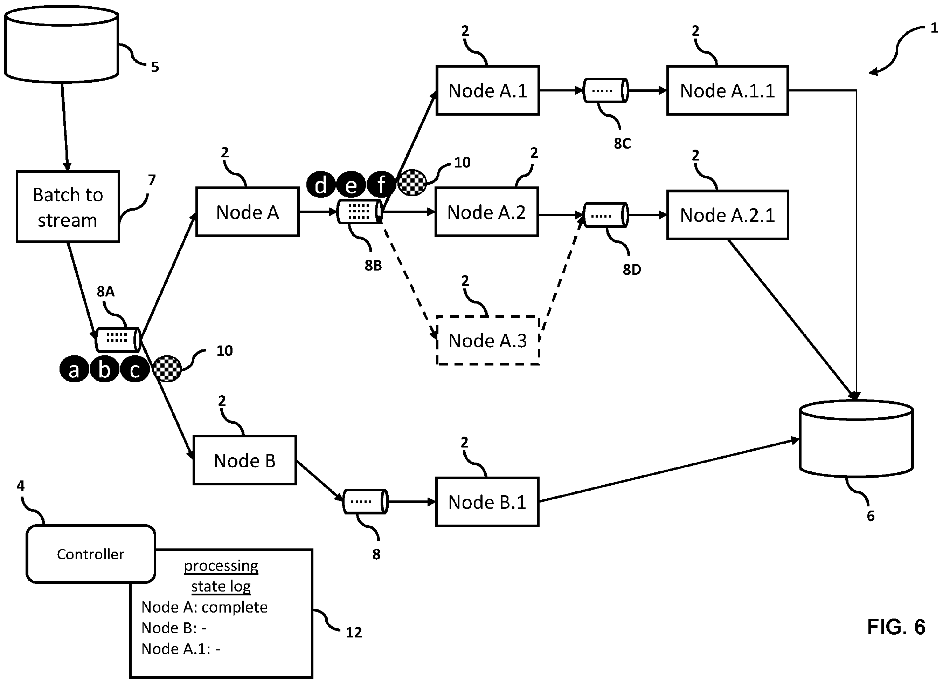

These functionalities of the controller and the processing nodes are described with reference to a non-limiting example shown by FIGS. 4 to 9. For ease of illustration, the communicative coupling of the controller 4 with the processing nodes is omitted in the visualization of FIG. 4. The controller 4 provides an end-of-batch indication for a batch of initial data to be processed by at least one first processing node of the plurality of processing nodes. In the example of FIG. 4, the batch of initial data is given by the message a, b, c as already described with reference to FIGS. 1 to 3. Before, upon or during reading the messages a, b, c from the initial storage 5 and insertion of the messages a, b, c to the first topic and partitions 8A, the controller appends an end-of-batch indication 10 to the batch of message a, b, c. In any event, the end-of-batch indication 10 is present when the first processing node(s) 2 (here: node A and node B) process(es) the batch of initial data. An end-of-batch indication 10 may be present for each path, i.e. for each partition in the examples of FIGS. 4-9, so that each node at the first processing stage (here: Node A and Node B) as well as the nodes at further processing stages receive and process the respective end-of-batch indication 10 after the data of the present batch was processed. Considering the processing at node A, node A processes message a and produces no, one or more resulting messages to partitions 8B, then processes message b and produces no, one or more further resulting message to partitions 8B, and then processes message c and produces no, one or more still further resulting message to partitions 8B. Node A then processes the end-of-batch indication 10 and recognizes that the local processing of the batch of the messages a, b, c is now completed at the node A.

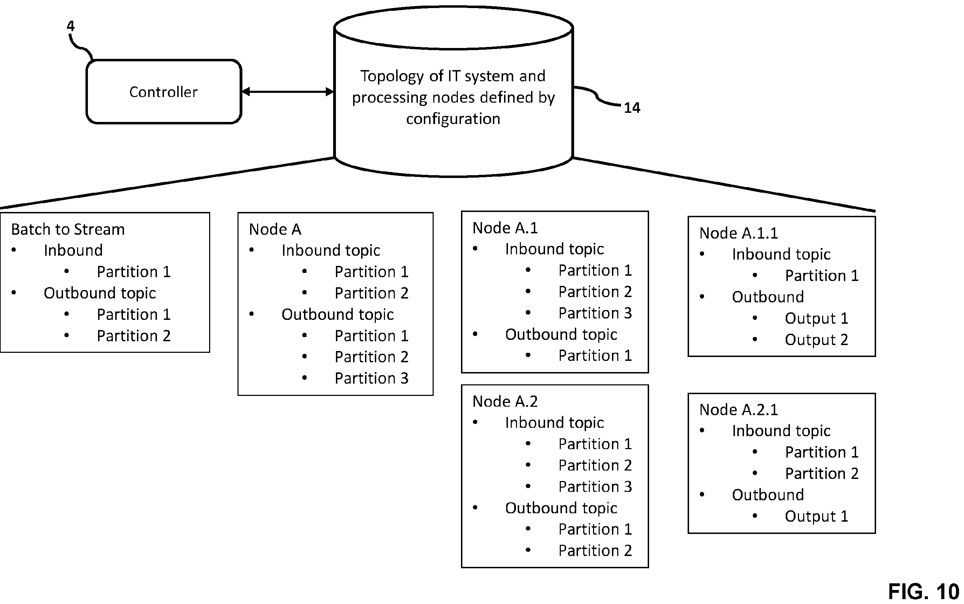

In response to this, the node A transmits a completion indication to the controller 4 indicating that the at least one first processing node (here: node A) has completed processing the batch of initial data resulting in one or more batches of intermediate data, i.e. resulting messages which have been output to the partitions 8B due to processing the messages a, b, c. The controller 4 receives the completion indication 11 from node A and marks in a process state log 12 maintaining the current processing status of the batch of messages a, b, c that node A has processed the batch of data completely. To be more specific, consistently with what is illustrated in FIG. 10 and will be discussed in more detail below, the controller 4 may maintain the information of the present processing state the level of individual partitions. The controller is then notified by node A each time the "end of batch indication" of one the partitions 8A has been processed.

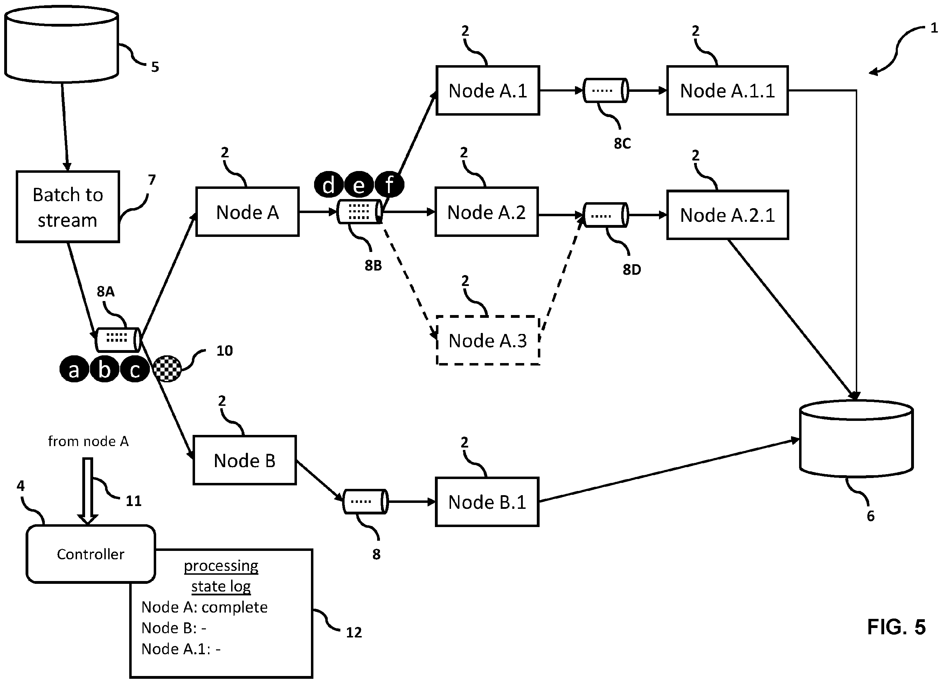

This situation with intermediate resulting message d, e, f inserted in partitions 8B (= intermediate data resulting from processing the initial data), received completion indication 11 from node A and the marked completed processing of the batch of data in the processing state log 12 is shown in FIG. 5, while processing the messages a, b, c as well as the end-of-batch indication 10 at the node B has not yet commenced, e.g. due to current workload at the node B.

A similar operation is executed to monitor the processing at the other processing nodes 2, be it for node B, nodes A. 1 and A.2 or the other nodes of the processing system 1 being concerned with processing the batch of data. Accordingly, the controller provides an end-of-batch indication for each of the one or more batches of intermediate data to be processed by one or more second processing nodes of the plurality of processing nodes. And the controller 4 receives, from each of the at least one second processing node, a completion indication indicating that the at least one second processing node has completed processing the batch of intermediate data resulting in a batch of final data.

Exemplarily, this is described with reference to FIGS. 5, 6, 7 and 8 for processing at node A.1 and node A1.1. In response to having received the completion indication 11 from node A, the controller 4 inserts an end-of-batch indication 10 to partitions 8B, appending the end-of-batch indication 10 to the intermediate messages d, e, f and marking the end of the batch of data to be processed by node A.1 (still FIG. 5). Likewise, node A.1 processes message d and produces no, one or more resulting messages to partition 8C, then processes message e and produces no, one or more further resulting message to partition 8C, and then processes message e and produces no, one or more still further resulting message to partition 8C. Node A.1 then processes the end-of-batch indication 10 and recognizes that the local processing of the batch of data currently being given by the intermediate messages d, e, f is now completed at the node A.1.

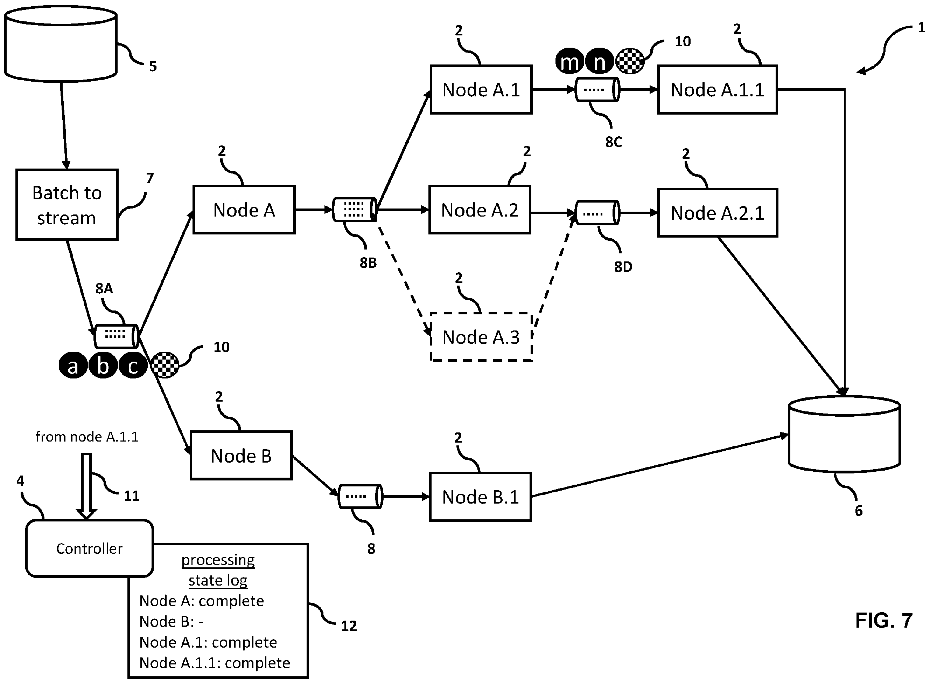

In response to this, the node A.1 transmits a completion indication to the controller 4 indicating that node A.1 has completed processing the batch of the messages d, e, f resulting no, one or multiple further intermediate messages (e.g. messages m and n, see FIG. 7), i.e. resulting messages which have been output to the partition 8C due to processing the messages d, e, f. The controller 4 receives the completion indication 11 from node A.1 and marks in the process state log 12 maintaining the current processing status that node A.1 has processed the batch of data completely. Generally, the controller 4 marks any one of the processing nodes as having completed processing the batch of data in response to receiving a completion indication from the respective processing node 2. Marking may also include noting a time stamp of reception of the completion indication 11 (or storing a time stamp included in the completion indication 11), so that the processing state log also reflects when the batch processing at a particular node 2 was completed. Thus, the controller 4 always has a current log reflecting the state of the batch processing within the processing system 1 at the level of the individual processing nodes being concerned with processing the current batch of data.

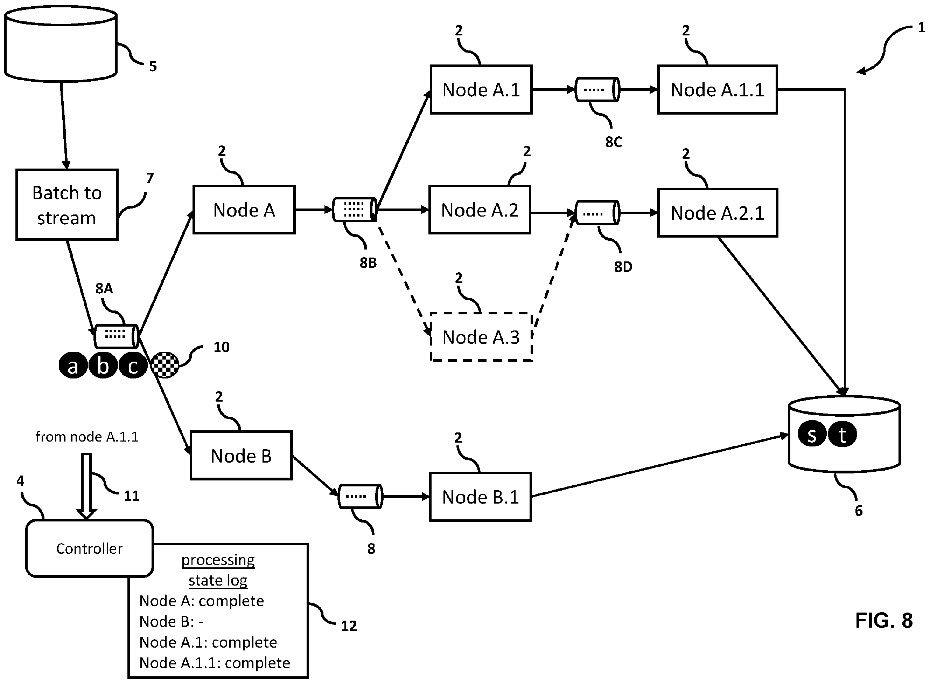

The controller then inserts a further end-of-batch indication in partition 8C indication that message n marks the end of the current batch of data to be processed by the next node A.1.1 (FIG. 7). Node A.1.1 then processes the messages m, n and transmits a completion indication to the controller 4 indicating that the at least one second processing node (here: node A.1.1) has completed processing the batch of intermediate data resulting in one or more batches of final data, i.e. resulting messages which have been output to the final storage 6 due to processing the messages m, n, in the example of FIG. 8 messages s and t. The controller 4 receives the completion indication 11 from node A.1.1 and marks in the process state log 12 maintaining the current processing status of the batch of data that also node A.1.1 has processed the batch of data completely (FIG. 8).

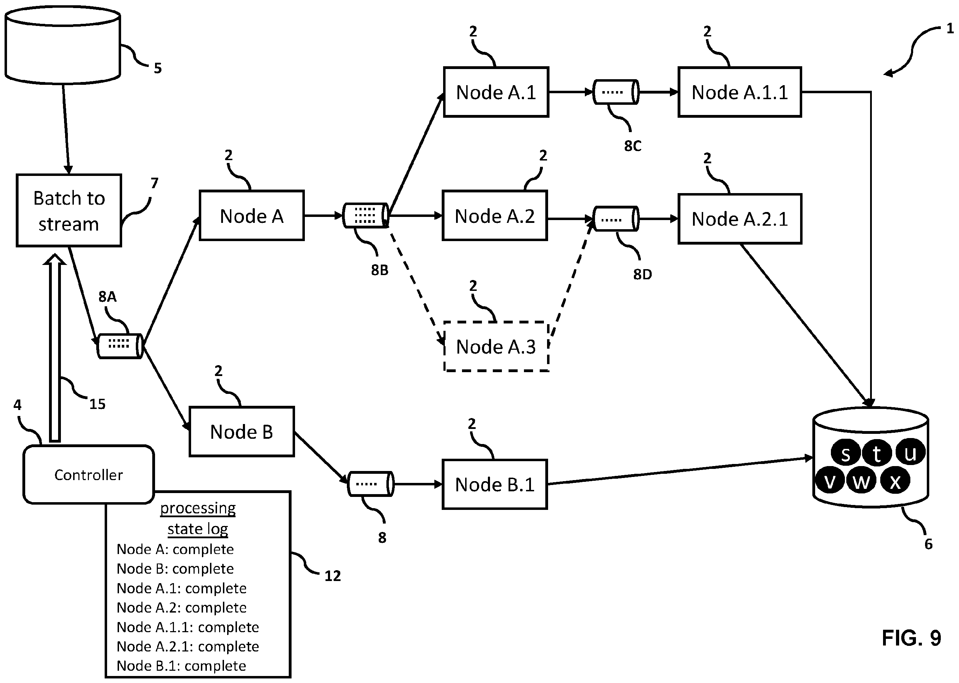

The same mechanisms are utilized for batch processing at the other nodes 2 involved including node B, node B.1, node A.2 and node A.2.1. Eventually, the controller 4 has received a completion indication from each of the processing nodes 2 concerned with processing the current batch of data and then determines that processing the batch of data has been completely at the overall level of the processing system 1. The controller 4 may inform any other entity, application, service, user, station etc. of the batch processing completing and/or trigger any other processing, such as processing a subsequent batch of data. To this end, the controller 4 generates a control signal indicating that the batch processing has been completely processed. Thus, generally, the control signal comprises one or more of an indication to an administrator, a command to initiate a further batch processing iteration, a command to deactivate at least a number of the plurality of processing nodes. For example, as shown in the exemplary batch processing completion state of FIG. 9, the control signal 15 may inform the batch to stream module 7 to start the next batch processing by reading a further batch of initial data from the initial storage to the partition(s) 8A. Generally, the control signal may be utilized to perform any sort of follow-on action, such as generating a log entry.

Note that the term first processing node generally refers to any node 2 in the first stage of the processing system 1 receiving the batch of initial data such as nodes A and B in FIGS. 4-9. The term second processing node generally refers to any node 2 in the last stage of the processing system 1 outputting final data to the result store 6 such as nodes A1.1 and A.2.1 in FIGS. 4-8. Without loss of generality, the number of stages processing the batches of data in the processing system 1 is unlimited, i.e. any number of intermediate stages may be present between the first stage given by the one or more first processing nodes and the last stage given by the one or more second processing nodes. Thus, for example, there may be no further processing nodes involved beyond the first and second node(s), there may be one further stage involved (such as realized by nodes A.1 and A.2 in FIGS. 4-9) or there may be multiple further stages concerned with processing the batch of data. As also visualized by FIGS. 4-9, the number of nodes at the various processing stages can be unequal and can change from batch processing to batch processing.

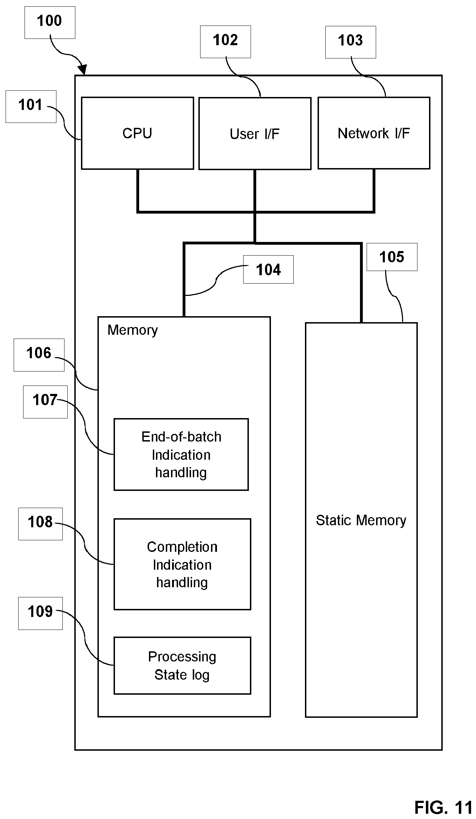

To implement the aforementioned functionalities and operations, the configuration of the topology of the processing system 1 underlying the processing of the present batch of data is available to the controller 4. An exemplary topology configuration 14 of the processing system 1 is schematically shown in FIG. 10. The topology configuration may be stored in a storage accessible by the controller 4 such as a memory of a computing machine hosting and implementing the controller 4 (cf. FIG. 11) or a configuration database on a server being part of or remote to the processing system 1.

As mentioned above, the topology of the processing system may dynamically change over time, as e.g. new processing nodes 2 are deployed or provide new services, processing nodes may be closed or deactivated in order to scale down the performance of the processing system 1, and/or the interconnections, topics, partitions, other type of queues or interfaces communicatively coupling the processing nodes 2 may be changed impacting the topology of the processing system 1. Note that the topology may change between batch processing iterations. During an individual batch processing iteration in the architecture 1, additional nodes 2 may be activated to scale up the performance of the processing system 1 without any change of the current topology (e.g. node A.3 in FIGS. 4-10 may be activated to supplement node A.2).

In some embodiments, the present topology is identified by the controller 4 itself, e.g. by probing elements of the processing system 1 or computation, e.g. at boot time of the controller 4. That is, if the processing nodes 2 are interconnected by dynamically changing paths, the controller determines the paths between at least the at least one first processing node and the at least second processing node to be used for passing the at least one batch of intermediate data from the at least one first processing node to or towards the at least one second processing node.

In some embodiments, the present topology configuration 14 is provided to the controller 4, e.g. by a supervising element of the processing system 1 or an administrator. In any event, the presently active topology configuration 14 with the currently active nodes 2 and paths between the nodes is available to the controller 4, in order to enable the controller 4 to transmit the end-of-batch indications 10 to the correct communication interfaces 8 and/or processing nodes 2 and to determine when the overall processing of the batch of data is concluded, i.e. when all processing nodes 2 have reported processing completion by way of the completion indications 11.

In some embodiments, the end-of-batch indications 10 and the completion indications 11 include at least one of a batch identification, a processing node identification, an identification of an interface interconnecting two processing nodes 2. Identification of the batch of data, i.e. a batch identifier, facilitates processing multiple batches of initial data through the processing system 1 at the same time. By way of batch identifiers, the controller 4 is capable to distinguish to which of multiple batches of initial data a completion indication 11 belongs. The nodes 2 read out the batch identifier from the end-of-batch indication 10 and include the same batch identification in the completion indication 11. A batch identification may take the form of any suitable identifier, such as a number, a character string, etc. The length of the batch identifier may depend on the number of batches which are expected to be processed simultaneously within the processing system 1.

The processing node identification included in the end-of-batch indication 10 may identify the target node 2 of the end-of-batch indication 10. The processing node identification may be used by the processing node 2 to verify that end-of-batch indication is addressed to the correct processing node 2. Likewise, the processing node identification in the completion indications 11 may inform the controller 4 from which processing node 2 completion indication 11 originates. A processing node identification may take the form of any suitable identifier, such as a number, a character string, etc. The length of the processing node identifier may depend on the number of processing nodes 2 which are expected to be deployed simultaneously within the processing system 1.

Likewise, the identification of an interface interconnecting two processing nodes may identify an interconnecting interface 8 such as a queue or partition forming the target or originator of an end-of-batch indication 10 and completion indication 11, respectively. Similarly, an interconnecting interface identification may take the form of any suitable identifier, such as a number, a character string, etc. The length of the interconnecting interface identifier may depend on the number of interconnecting interfaces 8 which are expected to be active simultaneously within the processing system 1.

In some embodiments, the end-of-batch indications 10 and/or the completion indications 11 include sequence numbers, facilitating an acknowledgement mechanism in order to ensure that no end-of-batch indication 10 and/or completion indication is lost. Unacknowledged indications 10, 11 can be re-transmitted after a given time-out period. In some embodiments, an acknowledgement mechanism is implemented without sequence numbers, by utilizing the aforementioned information of a batch identification and processing node identification which constitute a unique identification of an end-of-batch indication 10 and a completion indication, at least in a certain time period.

In embodiments, as already mentioned above, the processing nodes 2 are interconnected by way of partitions which store the one or more batches of intermediate data for retrieval by the at least one second processing node such as node A.1.1 in FIGS. 4-9. This is, for example, the case in an Apache Kafka^{®} based implementation. In some embodiments, other types of communication interfaces such as buffers or queues may be employed, depending on the utilized implementation technology.

In embodiments, as already mentioned above, the initial data (e.g. messages a, b, c in FIG. 4), the intermediate data (e.g. messages d, e, f in FIG. 5) and the final data (e.g. messages s, t, u, v, w, x in FIG. 9) are messages, streaming messages or event messages. The present methodologies are, however, not limited thereto. Rather, any sorts of batch-organized data irrespective of the content of the data and type of data (e.g. file, messages, data records, real-time batch data produced by another service, batch data produced by cloud-based applications, etc.) is encompassed.

As already explained above, the controller 4 generally marks any one of the processing nodes as having completed processing the batch of data in response to receiving a completion indication from the respective processing node 2. Thus, the controller 4 always has a current log reflecting the state of the batch processing within the processing system 1 at the level of the individual processing nodes being concerned with processing the current batch of data. This current overview of the batch processing state in the processing system 1 can be leveraged for further functionalities already before the overall completion of the batch processing according to FIG. 9. To this end, in embodiments, the controller monitors batch processing progress through the distributed information technology system 1 based on the received completion indications 11.

For example, the controller 4 may display a textual and/or graphical representation of the current batch processing indicating which processing nodes 2 have already reported completion by way of the completion indication 11 and which other processing nodes 2 are still outstanding. The controller 4 may also transmit intermediate control signals indicating a partial completion of the overall batch processing (e.g. an indication that 40% of the batch processing has been completed, as 40 out of 100 processing nodes 2 have already returned a completion indication 11, e.g. by way of a progress bar), e.g. in response to determining that one of the stages of processing nodes has been completely processed (e.g. in the example of FIGS. 4-9, when node A and node B have reported the completion indication 11 to the controller, i.e. the first stage has been successfully completed). Based on time stamps stored in the processing state log 12 indicating a point of time of batch processing completion at a particular processing node 2, the controller may also be able to prepare statistical data about the performance of the batch processing in the processing system 1, e.g. indicating average, minimum and/or maximum amounts of time which particular processing nodes 2 or stages of the processing system 1 have used to complete batch processing. The statistical data can then be utilized for evaluate processing system performance, e.g. detect bottlenecks, and take corrective actions such as scaling up or down respective stages or paths in the processing system 1.

The current state maintained by the processing state log 12 of the controller 4 may also be utilized in a suspend-and-resume situation. For example, the processing system 1 may be stopped for some reason (e.g. technical maintenance, unexpected system interruption, etc.) during the batch processing, e.g. in a situation similar to that of FIG. 7. The controller 4 is aware of the current state of the batch processing at the moment of the processing stop, at least at the granularity of the processing nodes. Assuming that the intermediate messages resulting from processing at the nodes 2 are stored in the nodes 2 and/or communication interfaces 8, the controller 4 may inform the respective nodes being currently active in the batch processing in the event of a resume and request these nodes 2 to resume processing the current batch of data. Hence, restarting the processing of the batch of data from scratch (i.e. starting again with processing the initial data) can be avoided.

An exemplary use case of the present methodologies is given by re-playing one year of archived batch files to initialize a new environment or to train a machine learning model based on historic data. For example, 365 files with multiple data records or messages are to be processed sequentially, one file per day. Hence, to ensure data consistency, it is not possible to process more than one batch at a time - a next batch of data is processed when the previous batch of data has been processed completely. The distributed processing system is built on a micro-service, event-driven system. Batch ingestion times can vary between 10 minutes and 10 hours.

A naive approach could be to ingest one file with batch data only every 10 hours. This is inefficient as it would take too much time to ingest all 365 files. In the event of extra latency during the ingestion of one file of batch data, data from two batches could be inadmissibly mixed, thereby hampering data consistency. The presently described solution provides an efficient way to automatically execute this use-case. It can be avoided to run these batches of data which may be potentially given by files containing lots of records to be processed not by monolithic applications scheduled to run at regular intervals, but to process these records using micro-services, event based, potentially cloud-native applications and thereby taking benefit of technical advantages such as parallelization and scalability/elasticity.

In summary, the present methodologies provide the functionality to determine the competition of a batch of data such as messages in a distributed, parallelized processing system with multiple processing nodes and dynamically changing paths between the processing nodes (the paths are determined and available to the controller 4 for the time of processing a given batch of data) and in which environment the number of data or messages produced by a node for a given input data or message is not deterministic and may range from zero to multiple output data or messages. In addition, processing data or messages at various processing nodes and paths can occur at different speeds and may be delayed or block for a certain period of time. Thus, the present methodologies provide processing determinism in such heterogenous and complex processing environments.

As mentioned above, the present methodologies may be provided by a computer-implemented method, by an apparatus such as a controller as well as by computer program instructions which, when executed by at least one processor, realizes the operations described above. Note that the examples given above, in particular the specific arrangements of the topologies in FIGS. 1-10, are provided for illustrative purposes. Other arrangements and variations of topologies are encompassed. For example, a node 2 may output any resulting messages to one path (in the examples of FIGS. 1-10 the partitions) only. As mentioned above, the number of intermediate layers may vary. The topology may change from one batch processing iteration throughout the architecture to another batch processing iteration. The number of nodes processing the data or message at any one of the layers may also dynamically change for reasons of up-scaling or down-scaling.

FIG. 11 is a diagrammatic representation of the internal components of a computing machine 100 implementing the functionality of the controller 4 as well as of the processing nodes 2. The computing machine 100 includes a set of instructions to cause the computing machine 100 to perform any of the methodologies discussed herein when executed. The computing machine includes at least one processor 101, a main memory 106 and a network interface device 103 which communicate with each other via a bus 104. Optionally, the computing machine 100 may further include a static memory 105 and a disk-drive unit. A video display, an alpha-numeric input device and a cursor control device may be provided as examples of user interface 102. The network interface device 103 connects the computing machine 100 to the other components of the distributed processing system 1 such as processing nodes 2 or the controller 4.

The main memory 106 may store temporary program data to facilitate the functionality of the computing machine 100 such as the controller 4. For example, the main memory 106 may store computer program data 107 to implement functionalities to handle the end-of-batch indications 10 and computer program data 108 to implement functionalities to handle the completion indications 11, as described above. If the computing machine 100 implements the controller 4, the main memory 106 may also store a file or database 109 holding the processing state log 12. The same may also be held in the static memory 105. The main memory 106 and/or the static memory may also store the topology configuration 14.

A set of computer-executable instructions (computer program code 108) embodying any one, or all, of the methodologies described herein, resides completely, or at least partially, in or on a machine-readable storage medium, e.g., the main memory 106. For example, the instructions 108 may include software processes implementing the batch processing tracking functionality of the controller 4. The instructions 108 may also implement the processing functionalities of processing nodes 2.

The instructions 108 may further be transmitted or received as a propagated signal via the Internet through the network interface device 103 or via the user interface 102. Communication within computing machine 100 is performed via a bus 104. Basic operation of the computing machine 100 is controlled by an operating system which is also located in the main memory 106, the at least one processor 101 and/or the static memory 105.

In general, the routines executed to implement the embodiments, whether implemented as part of an operating system or a specific application, component, program, object, module or sequence of instructions, or even a subset thereof, may be referred to herein as "computer program code" or simply "program code". Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the applicant's general inventive concept.

## Claims

1. A method for batch processing in a distributed information technology system comprising a plurality of interconnected processing nodes and a controller communicatively coupled to the processing nodes, the method comprising, at the controller:
providing an end-of-batch indication for a batch of initial data to be processed by at least one first processing node of the plurality of processing nodes;
receiving, from each of the at least one first processing node, a completion indication indicating that the at least one first processing node has completed processing the batch of initial data resulting in one or more batches of intermediate data;
providing an end-of-batch indication for each of the one or more batches of intermediate data to be processed by one or more second processing nodes of the plurality of processing nodes;
receiving, from each of the at least one second processing node, a completion indication indicating that the at least one second processing node has completed processing the batch of intermediate data resulting in a batch of final data;
generating a control signal indicating that the batch processing has been completely processed.

2. The method of claim 1, wherein the distributed information technology system comprises at least one of a micro-service event-driven system, a service-oriented system, a webservice system.

3. The method of claim 1 or claim 2, wherein the end-of-batch indications and the completion indications include at least one of a batch identification, a processing node identification, an identification of an interface interconnecting two processing nodes.

4. The method of any one of claims 1 to 3, wherein the processing nodes are interconnected by way of partitions which store the one or more batches of intermediate data for retrieval by the at least one second processing node.

5. The method of any one of claims 1 to 4, wherein the processing nodes are interconnected by dynamically changing paths, wherein the method further comprises, at the controller:
determining the paths between at least the at least one first processing node and the at least second processing node to be used for passing the at least one batch of intermediate data from the at least one first processing node to the at least one second processing node.

6. The method of any one of claims 1 to 5, wherein the control signal comprises one or more of an indication to an administrator, a command to initiate a further batch processing iteration, a command to deactivate at least a number of the plurality of processing nodes.

7. The method of any one of claims 1 to 6, wherein the initial data, the intermediate data and the final data are messages.

8. The method of any one of claims 1 to 7, further comprising, at the controller:
in response to receiving the completion indication from one of the at least one processing nodes, marking the one of the at least one processing nodes as having completed processing the batch of initial data.

9. The method of any one of claims 1 to 8, further comprising, at the controller:
monitoring batch processing progress through the distributed information technology system based on the received completion indications.

10. A controller communicatively coupled to processing nodes of a distributed information technology system, the controller being arranged to perform the method of any one of claims 1 to 9.

11. A computer program with program instructions which, when executed by at least one processor, implements the method of any one of claims 1 to 10.
